# EUROPÄISCHE PATENTSCHRIFT

(11) **EP 0 826 539 B1**
(45) Veröffentlichungstag und Bekanntmachung des Hinweises auf die Patenterteilung: **12.04.2000**
(21) Anmeldenummer: 97114301.1
(22) Anmeldetag: 19.08.1997
(51) Int. Cl.: B60J 7/185, B60J 7/12, B60J 7/14

(54) **Bewegliche Dachkonstruktion für einen offenen Personenkraftwagen**
Movable roof construction for convertible passenger vehicle
Construction de toit mobile pour voiture automobile transformable

(30) Priorität: 27.08.1996 DE 19634511
(43) Veröffentlichungstag der Anmeldung: 04.03.1998
(73) Patentinhaber: DaimlerChrysler AG, 70567 Stuttgart (DE)
(72) Erfinder: Schenk, Bernhard, 71034 Böblingen (DE); Schrader, Jürgen, 71093 Weil im Schönbuch (DE); Schuler, Eckart, 71065 Sindelfingen (DE)

(56) Entgegenhaltungen:
- DE-A- 4 415 969
- DE-U- 9 416 155

## Beschreibung

Die Erfindung betrifft eine bewegliche Dachkonstruktion für einen offenen Personenkraftwagen mit einem formstabilen vorderen Dachteil und einem formstabilen hinteren Dachteil, wobei das hintere Dachteil um eine fahrzeugfeste Schwenkachse zwischen seiner geschlossenen Funktionsposition und seiner geöffneten Ruheposition schwenkbeweglich gelagert ist und das vordere Dachteil mittels eines doppelseitigen Parallelogrammgestänges zwischen seiner geschlossenen Funktionsposition und seiner geöffneten Ruheposition verlagerbar ist, dessen auf jeder Seite angeordneter, hinterer Parallelogrammlenker fester Bestandteil des hinteren Dachteiles ist, und wobei das vordere Dachteil mittels einer Verriegelungsvorrichtung an einem Windschutzquerträger der Fahrzeugkarosserie festlegbar ist.

Eine solche Dachkonstruktion ist aus der DE 44 45 580 C1 bekannt. Das Cabriolet weist eine vordere formstabile Dachschale sowie eine hintere formstabile Dachschale auf, in der eine Heckscheibe integriert ist. Durch das Parallelogrammgestänge, dessen einer Parallelogrammlenker auf jeder Fahrzeugseite fest mit der hinteren Dachschale verbunden ist, wird die hintere Dachschale in einen Stauraum im Heckbereich des Cabriolets abgesenkt. Gleichzeitig wird die vordere Dachschale derart nach hinten parallelverlagert, daß sie auf die hintere Dachschale abgesenkt wird. Die Dachkonstruktion ist somit in ihrer abgesenkten Ruheposition im Stauraum zusammengeklappt. In der geschlossenen Funktionsposition bilden die beiden Dachschalen ein geschlossenes Coupédach, wobei die vordere Dachschale mittels einer Verriegelungsvorrichtung an einem Windschutzquerträger der Fahrzeugkarosserie oberhalb einer Windschutzscheibe festgelegt ist. Insbesondere bei höheren Fahrgeschwindigkeiten können sich im Bereich der Stoßkante zwischen der vorderen Dachschale und der hinteren Dachschale unangenehme Windgeräusche ergeben.

Aufgabe der Erfindung ist es, eine Dachkonstruktion der eingangs genannten Art zu schaffen, bei der Windgeräusche insbesondere bei höheren Fahrgeschwindigkeiten zuverlässig verhindert werden.

Diese Aufgabe wird dadurch gelöst, daß zwischen den beiden Parallelogrammlenkern auf jeder Seite des Parallelogrammgestänges ein Sperrmechanismus vorgesehen ist, der mit Hilfe von Übertragungsmitteln an die Verriegelungsvorrichtung des vorderen Dachteiles an dem Windschutzquerträger derart zwangsgekoppelt ist, daß der Sperrmechanismus für eine Freigabe der Parallelogrammlenker gemeinsam mit einer Entriegelung der Verriegelungsvorrichtung entriegelbar ist.

Weitere Vorteile und Merkmale der Erfindung ergeben sich aus den Unteransprüchen.

Der erfindungsgemäßen Lösung lag die Erkenntnis zugrunde, daß die Windgeräusche im Bereich der Stoßkante zwischen dem vorderen und dem hinteren Dachteil durch einen sich bei hohen Fahrgeschwindigkeiten aufgrund des entstehenden Unterdruckes auftretenden Spalt entstehen. Durch die erfindungsgemäße Lösung, die in der geschlossenen Funktionsposition der Dachkonstruktion jegliche Relativbewegung zwischen den beiden Parallelogrammlenkern auf jeder Seite des Parallelogrammgestänges verhindert, wird eine solche Spaltbildung und damit auch das Entstehen von Windgeräuschen zuverlässig vermieden. Da der Sperrmechanismus auf jeder Seite des Parallelogrammgestänges in besonders vorteilhafter Weise durch entsprechende Übertragungsmittel direkt mit der Verriegelungsvorrichtung des vorderen Dachteiles am Windschutzquerträger zwangsgekoppelt ist, wird zur Betätigung des Sperrmechanismus kein eigener Antrieb benötigt. Dabei ist der Sperrmechanismus durch die Übertragungsmittel derart an die jeweiligen Ent- oder Verriegelungsvorgänge der Verriegelungsvorrichtung gekoppelt, daß eine Entriegelung der Verriegelungsvorrichtung automatisch auch ein Lösen des Sperrmechanismus und umgekehrt ein Verriegeln der Verriegelungsvorrichtung automatisch ein Sperren der benachbarten Parallelogrammlenker durch den Sperrmechanismus bewirkt. Als Übertragungsmittel zwischen der Verriegelungsvorrichtung und dem von dieser entfernt gelegenen Sperrmechanismus können entweder Zugmittel oder Druckmittel oder kombinierte Zug/Druckmittel vorgesehen sein. Als Zug-, Druck- oder kombinierte Zug/Druckmittel können entsprechend gestaltete Bowdenzüge vorgesehen sein.

In erster Ausgestaltung der Erfindung sind als Sperrmechanismus zwischen den beiden Parallelogrammlenkern ein dem einen Parallelogrammlenker zugeordneter Sperrbolzen sowie ein am anderen Parallelogrammlenker längsverschiebbarer Sperriegel vorgesehen, der mittels eines Hakenfortsatzes den Sperrbolzen im gesperrten Zustand hintergreift. Dies ist eine besonders einfache und dennoch funktionssichere Ausgestaltung.

In weiterer Ausgestaltung der Erfindung ist als Übertragungsmittel für jeden Sperriegel ein an die Verriegelungsvorrichtung des vorderen Dachteiles gekoppelter Seilzug vorgesehen, und jedem Sperriegel ist eine den Sperriegel in Sperrichtung belastende Rückstellfeder zugeordnet. Der Seilzug dient somit als reines Zugmittel, der den Sperriegel für die Öffnungsbewegung, d.h. die Entriegelungsbewegung, an die Verriegelungsvorrichtung des vorderen Dachteiles koppelt. Die Rückstellfeder bewirkt die automatische Rückstellung des Sperriegels in seine Sperrposition, sobald der Sperriegel durch den Seilzug nicht mehr in Öffnungsrichtung belastet wird. Da die Rückstellung des Sperriegels ausschließlich von der Federkraft der Rückstellfeder abhängig ist, ist auch bei einem Ausfall entsprechender hydraulischer oder elektrohydraulischer Bewegungantriebe für die Dachkonstruktion immer noch ein Sperren des Sperrmechanismus gewährleistet.

In anderer Ausgestaltung der Erfindung ist der Sperrbolzen als Exzenter gestaltet, der in unterschiedlichen Relativpositionen zu dem mit dem Sperriegel versehenen Parallelogrammlenker an dem benachbarten Parallelogrammlenker festlegbar ist. Dadurch wird gewährleistet, daß der Sperriegel und der Sperrbolzen im gesperrten Zustand unabhängig von Abstandstoleranzen zwischen den Parallelogrammlenkern in jedem Fall unter Spannung miteinander in Anlage sind.

In vorteilhafter Ausgestaltung der Erfindung ist eine den Exzenter hintergreifende Aufnahmekontur des Hakenfortsatzes derart gestaltet, daß eine im wesentlichen punktförmige Anlage an dem Exzenter erfolgt. Durch diese Ausgestaltung wird ein - auf Block laufen - des Sperrmechanismus und ein Ausschlagen der Verriegelung im Anlagebereich verhindert.

In zweckmäßiger Ausgestaltung der Erfindung ist dabei eine nasenförmige Außenseite des Hakenfortsatzes mit einer Anlaufschräge zum selbsttätigen Hintergreifen des Exzenters versehen. Dadurch wird ein automatisches Einrasten des Sperrmechanismus bei einer Notbetätigung ermöglicht, indem die Anlaufschräge an dem Sperriegel gegen die Rückstellkraft der Rückstellfeder beim Schließen der Dachkonstruktion in Öffnungsrichtung weggedrückt und hinter dem Exzenter durch die Rückstellfeder automatisch in die Sperrposition zurückgestellt wird.

In der nachfolgenden Beschreibung wird ein bevorzugtes Ausführungsbeispiel der Erfindung anhand der Zeichnungen näher dargestellt. Es zeigen:
- Fig. 1: schematisch eine Ausführungsform einer erfindungsgemäß ausgebildeten Dachkonstruktion für einen offenen Personenkraftwagen,
- Fig. 2: in einer perspektivischen Explosionsdarstellung das Parallelogrammgestänge, die Verriegelungsvorrichtung und den Sperrmechanismus der Dachkonstruktion,
- Fig. 3: in vergrößerter Darstellung eine in Fahrtrichtung rechte Seite des doppelseitigen Parallelogrammgestänges nach Fig. 2 in der geschlossenen Funktionsposition der Dachkonstruktion,
- Fig. 4: das Paralellelogrammgestänge nach Fig. 3 in einer teilweise geöffneten Zwischenstellung, und
- Fig. 5: in vergrößerter Darstellung den Sperrmechanismus zum Blockieren der benachbarten Parallelogrammlenker.

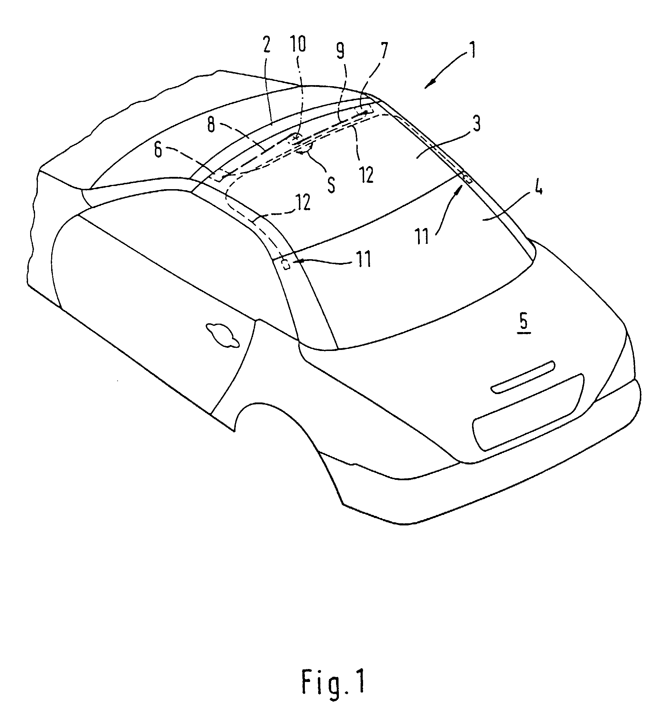

Ein Personenkraftwagen in Form eines Cabriolets 1 weist einen Fahrzeuginnenraum auf, der oberhalb seiner Bordkante nach vorne durch eine Windschutzscheibe und einen die Windschutzscheibe einfassenden Karosserierahmen begrenzt ist. Ein oberer Rahmenteil des Karosserierahmens wird durch einen Windschutzquerträger 2 gebildet. An den Windschutzquerträger 2 schließt eine nachfolgend näher beschriebene bewegliche Dachkonstruktion an, die in Fig. 1 in ihrer geschlossenen Funktionsposition dargestellt ist. Die Dachkonstruktion ist in eine abgesenkte Ruheposition in einem Stauraum eines Heckbereiches 5 des Cabriolets 1 versenkbar. Die bewegliche Dachkonstruktion weist einen vorderen Dachteil in Form einer stabilen Dachschale 3 auf, die mittels einer nachfolgend näher beschriebenen Verriegelungsvorrichtung an dem Windschutzquerträger 2 festlegbar ist. In Fahrzeuglängsrichtung nach hinten schließt an die vordere Dachschale 3 eine hintere formstabile Dachschale 4 an, die das hintere Dachteil der Dachkonstruktion bildet. In die hintere Dachschale 4 ist eine Heckscheibe integriert. Zu beiden Seiten der hinteren Dachschale 4 weist diese jeweils einen stabilen C-Säulenabschnitt auf. Das hintere Dachteil 4 schließt nach unten bündig mit der Bordkante des Cabriolets 1 ab.

Um die Dachkonstruktion aus ihrer geschlossenen Funktionsposition in die geöffnete Ruheposition zu überführen und aus dieser geöffneten Ruheposition wieder in die geschlossene Funktionsposition zurückzuführen, ist den beiden Dachschalen 3 und 4 ein Steuergestänge zugeordnet, das auf jeder Fahrzeugseite jeweils ein identisch gestaltetes Parallelogrammgestänge aufweist. Das Parallelogrammgestänge auf den beiden gegenüberliegenden Fahrzeugseiten ist jeweils im Bereich der C-Säulenabschnitte der hinteren Dachschale 4 fahrzeugfest positioniert. Jedes Parallogrammgestänge weist einen hinteren Parallelogrammlenker 13 auf, der fest mit dem zugehörigen C-Säulenabschnitt der hinteren Dachschale 4 verbunden ist. Der hintere Parallelogrammlenker 13 ist an einem Gelenkpunkt 15 an einem Dachschalenflansch 17 angelenkt, der fest mit der vorderen Dachschale 3 verbunden ist. In Fahrtrichtung in Abstand vor dem Gelenkpunkt 15 ist an dem mit der Dachschale 3 fest verbundenen Flansch 17 ein vorderer Parallelogrammlenker 14 im Bereich eines vorderen Gelenkpunktes 16 angelenkt, der an seinem unteren Ende fahrzeugfest gelagert ist.

Die gesamte beschriebene Kinematik des doppelseitigen Parallelogrammgestänges entspricht der Kinematik der Dachkonstruktion nach der DE 44 45 580 C1, so daß für eine detaillierte Beschreibung auf diesen Stand der Technik verwiesen wird.

Zur Verschwenkung und Verlagerung der beiden Dachschalen 3 und 4 zwischen ihrer geöffneten Ruheposition und ihrer geschlossenen Funktionsposition ist eine nicht dargestellte elektrohydraulische Antriebseinheit vorgesehen, die in ihrer Funktionsweise ebenfalls dem beschriebenen Stand der Technik entspricht. Gleiches gilt für das Öffnen und Schließen des Stauraumes im Heckbereich 5 des Cabriolets 1.

Um die bewegliche Dachkonstruktion dicht an den Windschutzquerträger 2 heranzuziehen und die vordere Dachschale 3 mit dem Windschutzquerträger 2 zu verriegeln, weist die Verriegelungsvorrichtung zwei über die Fahrzeugbreite zueinander beabstandete Verschlüsse 6 und 7 auf, die jeweils mit Zentrierhilfen und mit Sperrklinken versehen sind. Um ein gleichzeitiges Öffnen und Schließen der beiden Verschlüsse 6 und 7 zu gewährleisten, sind die beiden Verschlüsse miteinander synchronisiert. Dazu ist von jedem Verschluß 6 bzw. 7 aus eine Koppelstange 8 bzw. 9 zur Fahrzeugmitte hin geführt, die auf gegenüberliegenden Seiten einer Drehachse 10 eines nicht näher bezeichneten zentralen Drehhebels gelagert sind. Die gegenüberliegenden äußeren Enden der beiden Koppelstangen 8 und 9 stehen mit den Sperrklinken der Verschlüsse 6 bzw, 7 in Wirkverbindung. Der Drehhebel wird durch einen nicht dargestellten Hydraulikzylinder um die etwa vertikale Drehachse 10 verdreht, wodurch die Sperrklinken und damit die Verschlüsse 6 und 7 entsprechend dem gewünschten Öffnungs- oder Verriegelungsvorgang betätigbar sind.

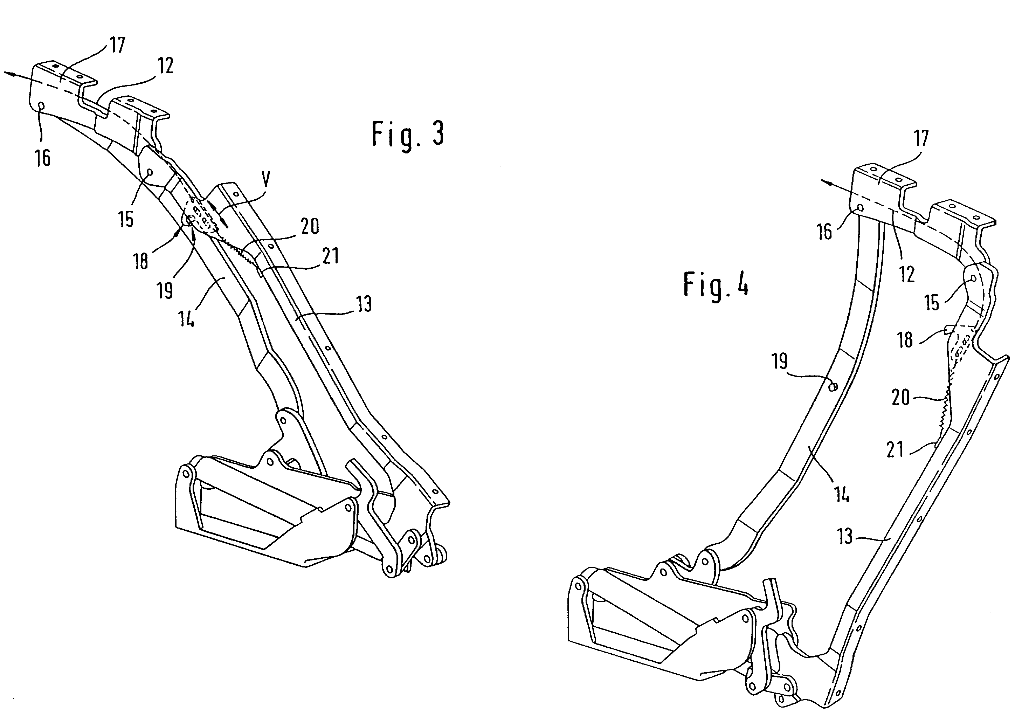

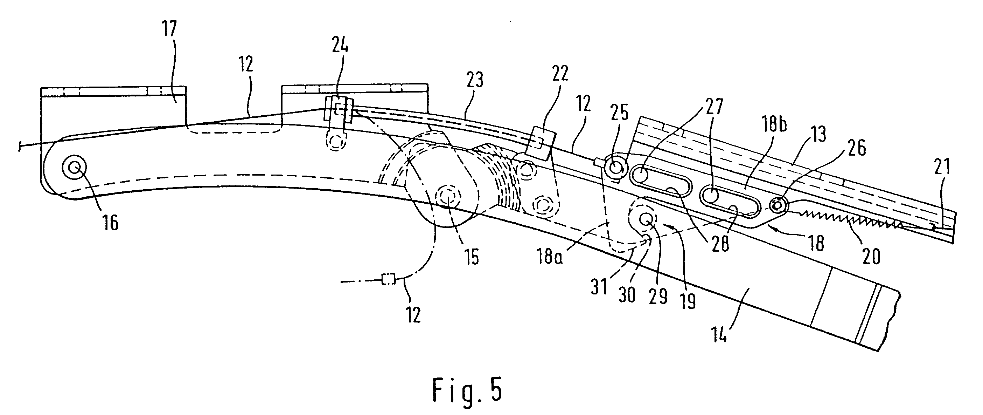

Um zu verhindern, daß sich in der geschlossenen Funktionsposition der beiden Dachschalen 3 und 4 insbesondere bei hohen Fahrgeschwindigkeiten im Bereich der gemeinsamen Stoßkante der beiden Dachschalen ein zu Windgeräuschen führender Spalt bildet, ist auf jeder Fahrzeugseite an jedem Paralellogrammgestänge ein Sperrmechanismus vorgesehen, der in der geschlossenen Funktionsposition den jeweiligen hinteren Parallelogrammlenker 13 und den benachbarten vorderen Parallelogrammlenker 14 starr koppelt und somit jegliche Relativbewegungen zwischen den beiden Parallelogrammlenkern und damit auch zwischen der vorderen Dachschale 3 und der hinteren Dachschale 4 verhindert. Der Sperrmechanismus weist auf jeder Fahrzeugseite und damit auch für jedes Parallelogrammlenkerpaar jeweils einen Sperriegel 18 auf, der an dem hinteren Paralellogrammlenker 13 in Längsrichtung dieses Parallelogrammlenkers 13 längsverschiebbar gelagert ist. Dazu weist der Sperriegel 18 einen Halteabschnitt 18b auf, der mit zwei zueinander koaxialen Langlöchern 28 versehen ist. In die Langlöcher 28 greifen zwei Haltebolzen 27 ein, die an dem hinteren Parallelogrammlenker 13 festgelegt sind. Der Sperriegel 18 ist über die Länge der Langlöcher 28 relativ zu den Haltebolzen 27 und damit auch relativ zu dem Parallelogrammlenker 13 linearbeweglich. Der Sperriegel 18 weist an seinem vorderen Ende einen von dem Parallelogrammlenker 13 wegragenden Hakenfortsatz 18a auf, der die Sperrfunktion zu dem benachbarten Parallelogrammlenker 14 übernimmt. Dazu ist am vorderen Parallelogrammlenker 14 ein Sperrbolzen in Form eines Exzenters 19 festgelegt, den der Hakenfortsatz 18a in seinem Sperrzustand (Fig. 3 und 5) hintergreift. Der Exzenter 19 weist eine zylindrische Anlagekontur für eine Aufnahme des Hakenfortsatzes 18a auf, die gegenüber einer Befestigungsachse eines Bolzenabschnittes 29 des Exzenters 19 exzentrisch versetzt ist. Je nachdem, in welcher Verdrehposition der Exzenter 19 an dem vorderen Parallelogrammlenker 14 festgelegt wird, ergibt sich somit eine veränderte Eingriffsposition relativ zu dem Hakenfortsatz 18a des Sperriegels 18. Dadurch ist es möglich, Toleranzen, die durch unterschiedliche Abstände zwischen den benachbarten Parallelogrammlenkern 13 und 14 entstehen, auszugleichen und immer ein exaktes und verspanntes Sperren und Blockieren von Relativbewegungen zwischen den beiden Parallelogrammlenkern 13 und 14 zu erzielen.

Der Sperriegel 18 wird durch eine Rückstellfeder 20 in seiner Sperrposition gehalten (Fig. 3 und 5), in der die Haltebolzen 27 auf Anschlag mit den zugeordneten Stirnrändern der Langlöcher 28 liegen. Die Rückstellfeder 20 ist als Schraubenzugfeder gestaltet und weist einen Einhängepunkt 26 an dem von dem Hakenfortsatz 18a abliegenden rückseitigen Ende des Sperriegels 18 auf. Das gegenüberliegende Federende der Rückstellfeder 20 ist an einem Federhalter 21 eingehängt, der an dem Parallelogrammlenker 13 festgelegt ist. Die Länge der Feder und der Abstand des Sperriegels 18 von dem Federhalter 21 sind derart aufeinander abgestimmt, daß die Rückstellfeder 20 sich auch in der zurückgezogenen Sperrposition des Sperriegels 18 unter Vorspannung befindet, um Klappergeräusche im Bereich des Sperrmechanismus zu verhindern.

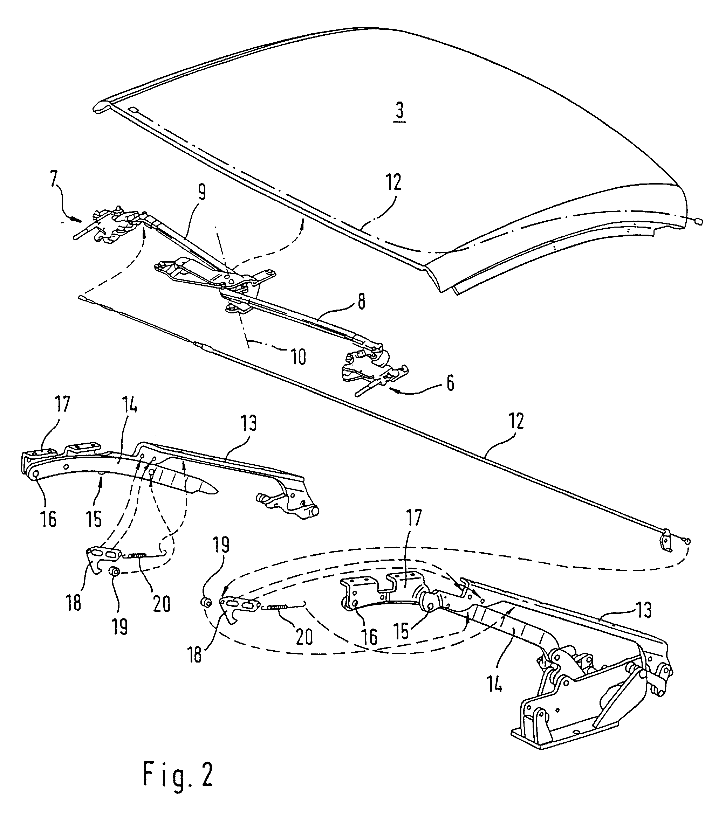

An dem dem Einhängepunkt 26 gegenüberliegenden vorderen Ende des Halteabschnittes 18b weist der Sperriegel 18 einen Befestigungspunkt 25 auf, an dem ein vorderes Ende eines zugübertragenden Bowdenzuges 12 festlegbar ist. Der Bowdenzug 12 erstreckt sich von dem Sperriegel 18 aus längs des jeweiligen seitlichen Dachrahmens der vorderen Dachschale 3 in Fahrtrichtung nach vorne und ist im Bereich der Verriegelungsvorrichtung derart quer über die Breite der Dachschale 3 geführt, daß das vordere Ende des Bowdenzuges 12 mit der gegenüberligenden Koppelstange 9 des Verschlusses 7 in Wirkverbindung steht (Fig. 1 und 2). Die beiden gegenüberliegenden Bowdenzüge 12 sind somit über Kreuz geführt. Die Führung des Bowdenzuges 12 ist so gewählt, daß eine Entriegelung der Verschlüsse 6 und 7 zwangsläufig auch eine Entriegelung der beiden Sperriegel 18 gegen die Rückstellkraft der Rückstellfeder 20 bewirkt. Beide Bowdenzüge 12 sind auf Höhe des jeweiligen Gelenkpunktes 15 (Fig. 5) in einer Ummantelung 23 geführt, die an ihren gegenüberliegenden Stirnenden in zwei Haltern 22 und 24 positioniert ist. Der eine Halter 22 ist dem hinteren Parallelogrammlenker 13 und der andere Halter 24 dem mit der vorderen Dachschale 3 fest verbundenen Flansch 17 zugeordnet. Die gestrichelte Darstellung des Bowdenzuges 12 nach Fig. 5 stellt die Krümmung des Bowdenzuges 12 im vollkommen geöffneten Zustand des Parallelogrammgestänges dar. Durch die Bodenzüge 12 bewirkt eine Betätigung der Verriegelungsvorrichtung durch den nicht dargestellten Hydraulikzylinder automatisch auch eine entsprechende Betätigung der Sperriegel 18, so daß für die Sperrmechanismen der beiden Parallelogrammgestänge kein eigener Antrieb benötigt wird.

Eine untere Kante des Halteabschnittes 18b geht in eine Aufnahmekontur des Hakenfortsatzes 18a über, die U-förmig gekrümmt ist. Die Aufnahmekontur ist in ihrem freien Querschnitt größer gestaltet als die Anlagekontur des Exzenters 19, so daß sich eine punktförmige Anlage zwischen der Aufnahmekontur und der Anlagekontur ergibt. Auch die Radien der U-förmigen Krümmung der Aufnahmekontur sind aus dem selben Grund größer gestaltet als der Radius der Anlagekontur.

Der Hakenfortsatz 18a jedes Sperriegels 18 weist auf seiner Außenseite eine Nase auf, die zum benachbarten Ende der Aufnahmekontur hin mit einer Anlaufschräge 31 versehen ist. Durch die Anlaufschräge 31 ist es möglich, auch unabhängig von einer Betätigung des Sperrriegels 18 durch den jeweiligen Bowdenzug 12 ein Einrasten des Sperriegels 18 am Exzenter 19 zu bewirken. Dadurch wird eine Notbetätigung ermöglicht, die eine Sperrung des Sperrmechanismus auch bei einem Ausfall der elektrohydraulischen oder hydraulischen Antriebseinheiten gewährleistet.

Die Aufnahmekontur des Hakenfortsatzes 18a weist eine sich zum freien Ende hin erweiternde Ausgleichskante 30 auf, die gegenüber der Verschiebeachse des Sperriegels 18 in einem spitzen Winkel nach unten verläuft. Durch diese Maßnahme wird zusätzlich zu der vergrößerten Gestaltung der Aufnahmekontur gewährleistet, daß beim Verriegeln des Hakenfortsatzes 18a mit dem Exzenter 19 kein - auf Block laufen - entstehen kann. Der Hakenfortsatz 18a liegt vielmehr punktförmig an der Anlagekontur des Exzenters 19 an. Dadurch wird ein Ausschlagen der Anlagebereiche verhindert, was zu Klappergeräuschen führen könnte. Außerdem werden durch diese Anlaufschräge 30 Beanspruchungen ausgeglichen, die durch Fahrdynamikbelastungen auftreten könnten.

## Patentansprüche

1. Bewegliche Dachkonstruktion für einen offenen Personenkraftwagen mit einem formstabilen vorderen Dachteil (3) und einem formstabilen hinteren Dachteil (4), wobei das hintere Dachteil (3) um eine fahrzeugfeste Schwenkachse zwischen seiner geschlossenen Funktionsposition und seiner geöffneten Ruheposition schwenkbeweglich gelagert ist und das vordere Dachteil (3) mittels eines doppelseitigen Parallelogrammgestänges zwischen seiner geschlossenen Funktionsposition und seiner geöffneten Ruheposition verlagerbar ist, dessen auf jeder Seite angeordneter, hinterer Parallelogrammlenker (13 bzw. 14) fester Bestandteil des hinteren Dachteiles ist, und wobei das vordere Dachteil mittels einer Verriegelungsvorrichtung an einem Windschutzquerträger (2) der Fahrzeugkarosserie festlegbar ist,
**dadurch gekennzeichnet,**
daß zwischen den beiden Parallelogrammlenkern (13 und 14) auf jeder Seite des Parallelogrammgestänges ein Sperrmechanismus vorgesehen ist, der mit Hilfe von Übertragungsmitteln (Bowdenzug 12) an die Verriegelungsvorrichtung des vorderen Dachteiles (3) an dem Windschutzquerträger (2) derart zwangsgekoppelt ist, daß der Sperrmechanismus für eine Freigabe der Parallelogrammlenker (13 bzw. 14) gemeinsam mit einer Entriegelung der Verriegelungsvorrichtung entriegelbar ist.

2. Dachkonstruktion nach Anspruch 1,
**dadurch gekennzeichnet,**
daß als Sperrmechanismus zwischen den beiden Parallelogrammlenkern (13 und 14) ein dem einen Parallelogrammlenker (14) zugeordneter Sperrbolzen (Exzenter 19) sowie ein am anderen Parallelogrammlenker (13) längsverschiebbarer Sperriegel (18) vorgesehen sind, der mittels eines Hakenfortsatzes (18a) den Sperrbolzen (Exzenter 19) im gesperrten Zustand hintergreift.

3. Dachkonstruktion nach Anspruch 2,
**dadurch gekennzeichnet,**
daß als Übertragungsmittel für jeden Sperriegel (18) ein an die Verriegelungsvorrichtung des vorderen Dachteiles (3) gekoppelter Bowdenzug (12) vorgesehen ist, und daß jedem Sperriegel (18) eine den Sperriegel (18) in Sperrichtung belastende Rückstellfeder (20) zugeordnet ist.

4. Dachkonstruktion nach Anspruch 3,
**dadurch gekennzeichnet,**
daß der Sperrbolzen als Exzenter (19) gestaltet ist, der in unterschiedlichen Relativpositionen zu dem mit dem Sperriegel (18) versehenen Parallelogrammlenker (13) an dem benachbarten Parallelogrammlenker (14) festlegbar ist.

5. Dachkonstruktion nach Anspruch 4,
**dadurch gekennzeichnet,**
daß eine den Exzenter (19) hintergreifende Aufnahmekontur des Hakenfortsatzes (18a) derart gestaltet ist, daß eine punktförmige Anlage an den Exzenter (19) erfolgt.

6. Dachkonstruktion nach Anspruch 5,
**dadurch gekennzeichnet,**
daß die Aufnahmekontur zur offenen Seite der Aufnahmekontur hin mit einer schräg zur Verschieberichtung des Sperriegels (18) nach außen verlaufenden Ausgleichskante (30) versehen ist.

7. Dachkonstruktion nach einem der Ansprüche 4 bis 6,
**dadurch gekennzeichnet,**
daß die nasenförmige Außenseite des Hakenfortsatzes (18a) mit einer Anlaufschräge (31) zum selbsttätigen Hintergreifen des Exzenters (19) versehen ist.

## Claims

1. A movable roof structure for an open passenger car with a dimensionally stable front roof section (3) and a dimensionally stable rear roof section (4), with the rear roof section (4) being located such that it can pivot between its closed operating position and its open home position about a pivoting axis fixed to the vehicle, and it being possible to move the front roof section (3) between its closed operating position and its open home position by means of a double-sided parallelogram linkage with a rear parallelogram guide (13/14) positioned on either side which is a fixed part of the rear roof section, and to fix the front roof section to a windscreen cross member (2) on the vehicle body by means of a locking device,
**characterised in that**
a blocking mechanism is provided between the two parallelogram guides (13 and 14) on each side of the parallelogram linkage which is coupled in a forced connection to the locking device on the front roof section (3) at the windscreen cross member (2) using transmission means (Bowden cable (12)) in such a manner that the blocking mechanism can be unlocked, together with the unlocking of the locking device, to release the parallelogram guides (13/14).

2. A roof structure in accordance with Claim 1,
**characterised in that**
a blocking pin (eccentric (19)) connected to one of the parallelogram guides (14) and a safety catch (18) which can be pushed along the other parallelogram guide (13) are provided to form the blocking mechanism between the two parallelogram guides (13 and 14) which engages behind the blocking pin (eccentric (19)) in the blocked position by means of a hook-shaped extension (18a).

3. A roof structure in accordance with Claim 2,
**characterised in that**
a Bowden cable (12) connected to the locking device on the front roof section (3) is provided as the transmission means for each safety catch (18), and that each safety catch (18) has a return spring (20) which applies a load to the safety catch (18) in the direction of locking.

4. A roof structure in accordance with Claim 3,
**characterised in that**
the blocking pin is designed as an eccentric (19) which can be fixed in various different positions in relation to the parallelogram guide (13) provided with the safety catch (18) to the adjacent parallelogram guide (14).

5. A roof structure in accordance with Claim 4,
**characterised in that**
a receiving section on the hook-shaped extension (18a) which engages behind the eccentric (19) is designed such that contact is made with the eccentric (19) at a point.

6. A roof structure in accordance with Claim 5,
characterised in that
the receiving section is provided with a an equalising edge (30) which runs outwards at an angle to the direction of operation of the safety catch (18) on the open side of the receiving section.

7. A roof structure in accordance with one of Claims 4 to 6,
**characterised in that**
the nose-shaped outer side of the hook-shaped extension (18a) is provided with an angled stopping edge (31) which automatically engages behind the eccentric (19).

## Revendications

1. Construction de toit mobile pour une voiture de tourisme transformable, comportant une partie de toit avant de forme stable (3) et une partie de toit arrière de forme stable (4), et dans laquelle la partie de toit arrière (3) est montée de manière à pouvoir basculer autour d'un axe de basculement solidaire du véhicule, entre sa position de fonctionnement fermée et sa position de repos ouverte, et la partie de toit avant (3) peut être déplacée à l'aide d'une tringlerie à parallélogramme articulé située sur les deux côtés, entre sa position de fonctionnement fermée et sa position de repos ouverte, le bras arrière (13 ou 14) du parallélogramme articulé, disposé de chaque côté, de cette tringlerie étant un composant fixe de la partie de toit arrière, tandis que la partie de toit avant peut être fixée à la carrosserie du véhicule au moyen d'un dispositif de verrouillage, sur un support transversal (2) du pare-brise, caractérisée en ce qu'entre les deux bras articulés (13 et 14) du parallélogramme est prévu, de chaque côté de la tringlerie en forme de parallélogramme, un mécanisme de blocage qui est couplé selon un couplage forcé, à l'aide de moyens de transmission (câble Bowden 12), au dispositif de verrouillage de la partie de toit avant (3) sur le support transversal (2) du pare-brise de telle sorte que pour une libération des bras articulés (13 et 14) du parallélogramme le mécanisme de blocage puisse être déverrouillé conjointement avec un déverrouillage du dispositif de verrouillage.

2. Construction de toit selon la revendication 1, caractérisée en ce qu'il est prévu, comme mécanisme de blocage entre les deux bras articulés (13 et 14) du parallélogramme, une broche de blocage (excentrique 19), qui est associée à un bras articulé (14) du parallélogramme, ainsi qu'un verrou de blocage (18), qui est déplaçable longitudinalement sur l'autre bras articulé (13) du parallélogramme et, à l'état bloqué, s'engage au moyen d'un prolongement en forme de crochet (18a), derrière la broche de blocage (excentrique 19).

3. Construction de toit selon la revendication 2, caractérisée en ce qu'il est prévu comme moyens de transmission, pour chaque verrou de blocage (18), un câble Bowden (12), qui est couplé au dispositif de verrouillage de la partie de toit avant (3), et qu'à chaque verrou de blocage (18) est associé un ressort de rappel (20), qui charge le verrou de blocage (18) dans le sens de blocage.

4. Construction de toit selon la revendication 3, caractérisée en ce que la broche de blocage est agencée sous la forme d'un excentrique (19), qui peut être fixé sur le bras articulé voisin (14) du parallélogramme dans différentes positions relatives par rapport au bras articulé (13) du parallélogramme, qui est pourvu du verrou de blocage (18).

5. Construction de toit selon la revendication 4, caractérisée en ce qu'un contour de réception, qui s'engage derrière l'excentrique (19), du prolongement en forme de crochet (18a) est conformé de telle sorte qu'il s'applique ponctuellement sur l'excentrique (19).

6. Construction de toit selon la revendication 5, caractérisée en ce que le contour de logement comporte, en direction de son côté ouvert, une arête de compensation (30) qui s'étend obliquement vers l'extérieur par rapport à la direction de déplacement du verrou de blocage (18).

7. Construction de toit selon l'une des revendications 4 à 6, caractérisée en ce que le côté extérieur en forme de bec du prolongement en forme de crochet (18a) est pourvu d'une rampe oblique de montée (31) pour l'engagement automatique derrière l'excentrique (19).
